**Europäisches Patentamt**

**European Patent Office**

**Office européen des brevets**

(19)

(11) **EP 1 568 461 A1**

(12) **EUROPÄISCHE PATENTANMELDUNG**

(43) Veröffentlichungstag:
**31.08.2005 Patentblatt 2005/35**

(51) Int Cl.⁷: **B29C 45/17**, B29C 45/57
// B29C45/77

(21) Anmeldenummer: **05006085.4**

(22) Anmeldetag: **17.12.2001**

(84) Benannte Vertragsstaaten:
**AT BE CH CY DE DK ES FI FR GB GR IE IT LI LU
MC NL PT SE TR**

(30) Priorität: **22.12.2000 CH 25332000**

(62) Dokumentnummer(n) der früheren Anmeldung(en)
nach Art. 76 EPÜ:
**01271939.9 / 1 343 621**

(71) Anmelder: **Netstal-Maschinen AG
8752 Näfels (CH)**

(72) Erfinder: **Weinmann, Robert
8872 Weesen (CH)**

(74) Vertreter: **Ackermann, Ernst
Patentanwalt
Egghalden
9231 Egg-Flawil (CH)**

Bemerkungen:
Diese Anmeldung ist am 19 - 03 - 2005 als
Teilanmeldung zu der unter INID-Kode 62
erwähnten Anmeldung eingereicht worden.

(54) **Spritzgiessmaschine zur Herstellung von Präzisionsteilen**

(57)    Die Erfindung betrifft eine Spritzgiessmaschine für die Herstellung von Präzisionsteilen, insbesondere von flachen optischen Datenträgern, mit einer Spritzgiessmaschine mit zwei Formhälften, einer angetriebenen Formhälfte sowie einer Gegenformhälfte sowie einem Prägeanrieb, wobei der Kraftschluss zwischen der angetriebenen Formhälfte und der Gegenformhälfte bei der Grundeinstellung und dem ganzen Spritzzyklus über antreibbare Säulen der Spritzgiessmaschine herstellbar ist, welche sich in Funktion des Prägekraftverlaufes dehnen und das Spaltmass zwischen der angetriebenen Formhälfte und der Gegenformhälfte entsprechend beeinflussen.

Fig. 1

EP 1 568 461 A1

**Beschreibung**

**Technisches Gebiet**

Die Erfindung betrifft eine Spritzgiessmaschine für die Herstellung von Präzisionsteilen, insbesondere von flachen optischen Datenträgern, mit einer Spritzgiessmaschine mit zwei Formhälften, einer angetriebenen Formhälfte sowie einer Gegenformhälfte sowie einem Prägeantrieb, wobei der Kraftschluss zwischen der angetriebenen Formhälfte und der Gegenformhälfte bei der Grundeinstellung und dem ganzen Spritzzyklus über antreibbare Säulen der Spritzgiessmaschine herstellbar ist, welche sich in Funktion des Prägekraftverlaufes dehnen und das Spaltmass zwischen der angetriebenen Formhälfte und der Gegenformhälfte entsprechend beeinflussen.

**Stand der Technik**

Die Gattung der Spritzgiessmaschinen für die Herstellung von flachen Datenträgern weist grundsätzlich zwei Formhälften auf. Die eine bewegliche, erste Formhälfte wird mittels Antriebssystem gegenüber einer Antriebsträgerplatte für das Formschliessen sowie das Formöffnen bewegt. Die Formbewegung kann z.B. auf Grund einer Weg-, einer Druck- und/oder einer Geschwindigkeitsfunktion gesteuert werden. Die GB-PS 1 226 118 schlägt vor, den Geschwindigkeitsablauf der Formbewegung für bestimmte Abschnitte eines Giesszyklusses nach vorgegebenen Programmen zu steuern. Bei der Verwendung von Hydraulikzylindern als Antriebssystem lässt sich die Geschwindigkeit der beweglichen Formhälfte über die Oelmenge steuern und/oder regeln. Mit einem zusätzlichen Oeltemperaturparameter kann so mit hoher Genauigkeit ein optimaler Geschwindigkeitsverlauf der bewegbaren Formhälfte sichergestellt werden.

Die Praxis zeigt, dass selbst wenn alle Möglichkeiten der Steuer- und Regeltechnik im Hinblick auf die baulichen Elemente, wie dargestellt wurde, ausgeschöpft sind, die Endprodukte, vor allem in Bezug auf das Gewicht jeder einzelnen Platte, unverhältnismässig grosse Variationen aufweisen können. Testwägungen haben gezeigt, dass innerhalb einer Seriefabrikation im Extremfalle Gewichtsunterschiede bis zu 10% zwischen der leichtesten und der schwersten CD durchaus festgestellt werden können. Vom Erfinder ist erkannt worden, dass die äusseren Parameter wie

- exaktes Voreinstellen des Kompressionsspaltes
- exakte Bedingungen für den Übergang von der Spritz- in die Prägephase
- sowie abschnittsweises, exaktes Geschwindigkeitsführen der Prägephase

zwar wichtig sind, aber nur die eine Hälfte der möglichen Fehlerquellen berücksichtigen. Dies gilt zumindest, soweit dies die Gewichtsgenauigkeit der einzelnen Endprodukte betrifft.

Beim klassischen Spritzgiessen wird höchste Genauigkeit, auch im Hinblick auf die Konstanz der Gewichtsgenauigkeit der Endprodukte, erreicht. Dies ist vor allem auf die Tatsache zurückzuführen, dass nach dem Einspritzen eine relativ lange Nachdruckphase gängige Praxis ist. Während der Nachdruckphase, welche über die Bewegung der Einspritzschnecke kontrolliert wird, werden kleinste Mengenvariationen der zuvor eingespritzen flüssigen Kunststoffmasse korrigiert. Bei der Herstellung von flachen optischen Datenträgern kennt man die sogenannte Nachdruckphase nicht. An die Stelle der Nachdruckphase ist ein vollflächiges Zusammendrücken der Giessform Voraussetzung, damit überhaupt die Oberflächenstruktur mit den eingeprägten Daten in der extrem hohen Qualität erreichbar ist. Durch die Platzverhältnisse und die extrem kurzen Zykluszeiten bedingt ist ein aktives bzw. gesteuertes Schliessen der Einspritzdüse unrealistisch.

Der Erfindung wurde nun die Aufgabe gestellt, eine Vorrichtung zu entwickeln, welche höhere Verstellgeschwindigkeiten und kürzere Umrüstzeiten und eine höchste Qualität des Endproduktes und vor allem auch eine hohe Gewichtsgenauigkeit der flachen Datenträger sicherstellen können.

**Darstellung der Erfindung**

Die erfindungsgemässe Spritzgiessmaschine ist dadurch gekennzeichnet, dass der Säulenantrieb den Säulen zugeordnete Vorspannfedern aufweist. Für besonders vorteilhafte Ausgestaltungen des Verfahrens wird auf die Ansprüche 2 bis 5 Bezug genommen.

Die neue Lösung geht von zwei grundlegenden maschinenbaulichen Sachverhalten aus:

1. Bei einer konkreten Spritzgiessmaschine werden die Kompressionskräfte über Säulen gehalten. Bei den enormen Kräften, die für das Prägen notwendig sind, ergibt sich eine Maschinendehnung in der Grössenordnung von 0,1 mm bis zu 1 mm und mehr. Die Dicke von Datenträgern liegt beispielsweise bei 0,4 bis 0,8 mm. Bei Anwendung der höchsten Kräfte während dem Prägeschritt auf die bewegliche erste Formhälfte flieht die zweite Formhälfte um das Mass der Maschinendehnung, das grösser sein kann als die Dicke des Datenträgers.

2. Bei einem elektromechanischen Antrieb kann zwar sowohl der Weg wie auch eine Kraft exakt ermittelt werden. Keine der beiden Grössen (Kraft oder Weg) geben aber für sich ein wahres Bild von der Grösse des Spaltes zwischen den beiden Platinen bzw. von den wirklichen Verhältnissen, insbesondere für das Prägen der flachen Datenträger.

Vom Erfinder ist erkannt worden, dass als eigentlich kritische "äussere Grössen" im Falle eines elektromechanischen Antriebes die beiden Parameter:

- Wegfunktion und
- wirksame Kompression

zusammen im Vordergrund stehen. Die Wegfunktion deshalb, weil diese auch über die Mechanik abgebildet wird, und die wirksame Kompression, weil diese in einem direkten Verhältnis steht zur konkreten Maschine, insbesondere zur Dehnung der Säule. Erst die beiden Parameter zusammen geben Auskunft über die tatsächlichen Verhältnisse in beiden Platinen, sobald eine Kompressionskraft aufgebaut wird. Die neue Lösung gestattet damit, alle Teilparameter, welche Einfluss auf die Abstandsverhältnisse haben, direkt zu berücksichtigen. Im Hinblick auf die Kompression sind dies zuerst alle möglichen Deformationen, mit Einschluss der Säulendehnung. Die Wegfunktion schliesst die speziellen, konkreten Antriebsmittel ein. Wenn zusätzlich ein Temperaturfaktor miteinfliesst, kann die Steuerung/Regelung mit den wirklichen Verhältnissen in den Formkavitäten mit höchster Genauigkeit arbeiten, so dass die Forderung der Reproduzierbarkeit, soweit diese durch maschinenbauliche Elemente beeinflussbar ist, erfüllt wird. Dies gilt ganz besonders bei den klassischen Spritzgiessmaschinenkonzepten mit relativ langen Säulen.

Als zur Zeit beste Erfindung kann die neue Lösung bei der Gattung von Spritzgiessmaschinen angewendet werden, wie sie in der WO00/47389 der Anmelderin beschrieben ist. Es handelt sich um eine Maschine mit einem sogenannten Lang- und einem Kurzhub. Beide Bewegungen werden über einen elektromotorischen Antrieb sichergestellt. Das Konzept sieht vor, dass die Antriebsträgerplatte ortsfest mit dem Ständer verbunden ist, wohingegen die beiden Formhälften relativ zueinander und zum Maschinenständer verschiebbar gelagert sind. Die Kompressionsfunktion (K x F) wird zumindest primär aufgrund der Säulendehnung (K) sowie der wirksamen Kompressionskraft (F) ermittelt. Mit der Säulendehnung bzw. dem Faktor K können alle übrigen Verformungsfaktoren, z.B. der verschiedenen Platten, miterfasst werden. Die Kompressionskraft kann auf verschiedenste Weise ermittelt und z.B. in erster Näherung aus dem Drehmoment des Antriebsmotores abgeleitet werden. Nachteilig ist dabei, dass Reibfaktoren, genau so wie Beschleunigungskräfte das Ergebnis verfälschen. Bevorzugt werden geeignete Drucksensoren aus dem Bereich der Formen oder aber Sensoren für die Dehnung der Säulen zur Ermittlung der wirksamen Kompression zugrunde gelegt. Im Falle der Messung der Säulendehnung reduziert sich die Steuerung/Regelung beim Fehlen einer Kompression vor allem auf die Wegfunktion, da in diesem Fall die wirksame Kompression gleich Null ist. Besonders bevorzugt erfolgt der elektromotorische Antrieb über einen Servomotor und der mechanische Übertrieb über eine Kurbel oder einen Exzenter. Dabei kann die Wegfunktion aus der Stellung der Kurbel- oder des Exzenters ($\varphi$) abgeleitet und entsprechend der Positionserkennung aus der Regelung des Servomotores ermittelt werden. Die realen Verhältnisse in den Kavitäten der Formen lassen sich aus der Wegfunktion der angetriebenen Platte [f($\varphi$)] sowie der Kompressionsfunktion (K x F) mit höchster Genauigkeit ermitteln, so dass die Antriebsmittel über mehrere Prägeteilschritte nach einem vorgegebenen Geschwindigkeitsprogramm optimal gesteuert werden können. Der Kurbel- bzw. Exzenterantrieb hat nicht nur den enormen Vorteil, dass in Totpunktnähe eine maximale Anpresskraft erzeugt werden kann, sondern auch, dass die Bewegungsfunktion aus der Umsetzung einer Kreisbewegung in eine Linearbewegung geometrisch mit höchster Genauigkeit definierbar und aus der Positionsstellung im Servomotor herleitbar ist. Sinngemäss kann jedoch auch ein Kniehebel oder eine Zahnstange sowie eine Kombination beider sehr vorteilhaft eingesetzt werden.

Gemäss der bevorzugten Lösung wird der Exzenter- oder Kurbelantrieb einerseits auf der fixen Antriebsträgerplatte abgestützt und ist anderseits mit der angetriebenen Platte verbunden. Der Exzenter- bzw. Kurbelantrieb wird derart ausgelegt, dass der Prägehub für die maximale Kompression in Totpunktnähe nutzbar ist, wobei bevorzugt bei maximaler Kompression ein Restspalt (S) zwischen den beiden Formhälften verbleibt. Der elektromechanische Antrieb weist einen Servomotor mit Positionserkennung für die angetriebene Platte auf, wobei bevorzugt wenigstens einzelne Prägeschritte über ein Geschwindigkeitsprogramm steuerbar sind.

Auf der maschinenbaulichen Seite wurde bisher als optimale Lösung befunden, wenn die beiden Formhälften zwischen einer angetriebenen Platte und einer Gegenplatte über Säulen gehalten, mittels eines elektromechanischen Antriebes verspannt werden und die Antriebsmittel auf der Basis der Wegfunktion der angetriebenen Platte und der wirksamen Kompression bzw. der Maschinendehnung im Sinne eines Basisprogrammes programmsteuerbar sind. Bei diesem Vorschlag werden zwei völlig unterschiedliche Parameter zu einer echten Synthese verbunden. Neben der direkt durch den Antrieb verursachten Bewegung und die durch die Kompression verursachte Maschinenverlängerung als äussere Parameter werden die inneren Parameter, insbesondere die Gewichtsmenge der eingespritzten Masse, durch eine Detektion des Druckes kontrolliert und soweit erforderlich korrigiert. Die Kompressionsfunktion (K x F) wird auf Grund der Maschinendehnung (K) sowie der wirksamen Kompressionskraft (F) ermittelt. Vorteilhafterweise erfolgt der elektromotorische Antrieb über einen Servomotor und der mechanische Übertrieb über eine Kurbel, einen Exzenter, Kniehebel oder über Zahnstangen. Wenn der mechanische Übertrieb über eine Kurbel oder einen Exzenter erfolgt und die Wegfunktion aus der Kurbel- oder Exzenterstellung ($\varphi$) abgeleitet wird, kann die Positionserkennung aus der Regelung des Servomotores ermittelt werden. Der totale Prägehub bzw. Kompressionsweg wird aus der Wegfunktion der angetriebenen Platte [f($\varphi$)] sowie der Kompressionsfunktion (K x F) ermittelt und die Antriebsmittel, zumindest während mehreren Prägeteilschritten, nach einem Geschwindigkeitsprogramm gesteuert.

## Kurze Beschreibung der Erfindung

In der Folge wird die Erfindung an Hand von einigen Beispielen mit weiteren Einzelheiten erläutert. Es zeigen:

| | |
|---|---|
| die Figur 1 | ein Schema für das Grundprinzip der neuen Lösung; |
| die Figur 2 | eine vereinfachte Darstellung für das Spritzgiessen von flachen optischen Datenträgern; |
| die Figur 3a | die Spielaufhebung einer Lösung gemäss Figuren 6a - 6c; |
| die Figur 3b | die Lagerung einer Säule in grösserem Massstab; |
| die Figur 3c | die Exzenter- bzw. Kurbelbewegung; |
| die Figuren 4a bis 4d | verschiedene Diagramme, dargestellt über der Zeit, Figur 4a die Lage der Form, die Figur 4b die Prägekraft, die Figur 4c den Prägespalt und die Figur 4d die Position der Einspritzschnecke; |
| die Figur 5a | ein Beispiel für das maschinenbauliche Grundprinzip der neuen Lösung; |
| die Figur 5b | den theoretischen Kraftverlauf am Ende der Schliessbewegung beim Aufbau der Prägekraft; |
| die Figur 5c | die Funktion von Position und Drehwinkel für den Kurbeltrieb; |
| die Figur 6a | eine Spritzgiessmaschine des Standes der Technik für die Herstellung von z.B. CDs; |
| die Figur 6b | ein vorteilhaftes, maschinenbauliches Grundkonzept der Formschliesseinheit für die neue Lösung; |
| die Figur 6c | schematisch ein Schnitt einer Drei-Säulenmaschine. |

## Wege und Ausführung der Erfindung

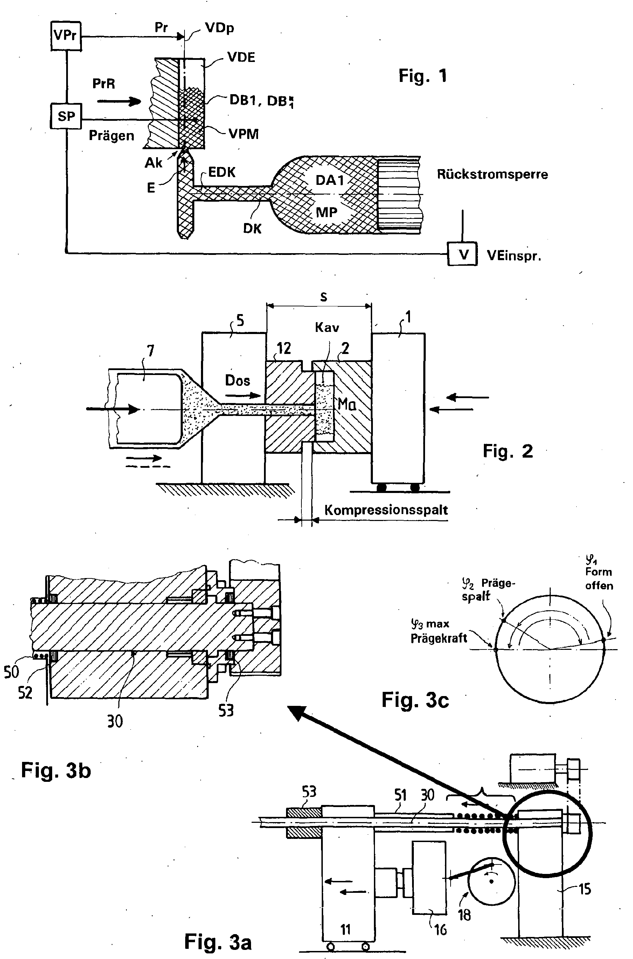

Die Figur 1 zeigt das Grundprinzip der neuen Lösung. Das Viereck $V_{DE}$ links oben stellt das Volumen der Kavitäten am Ende der Einspritzphase dar. Der Pfeil Pr zeigt die Richtung der Prägebewegung, wobei die strichpunktierte Linie $V_{DP}$ das verkleinerte Volumen am Ende der Prägephase bedeutet. Der schraffierte Teil $V_{PM}$ symbolisiert die eingespritzte Prägemasse, welche kleiner ist als das Volumen der Kavität $V_{DE}$. Der Pfeil E bedeutet die Einspritzrichtung und der Doppelpfeil $D_K$ die beiden Strömungsrichtungen für eine Korrektur der eingesprpitzten Masse. $M_P$ ist das Massepolster am Ende des Einspritzvorganges, welches durch die Rückstromsperre konstant gehalten wird. Beim Einspritzen wird die flüssige Masse durch die Linearbewegung der Einspritzschnecke über den Einspritzdüsenkanal $E_{DK}$ über den Angusskanal AK in die Kavität eingespritzt. Am Ende des Einspritzvorganges stellt sich ein bestimmter Druck $D_{B1}$ ein, der über einen Drucksensor Sp detektiert und der Regelung für die Prägebewegung als Druck-Istwert zugeführt wird.

Ist der Druck $D_{B1}$ zum Messzeitpunkt grösser als der gewünschte Druck-Sollwert, wird mit dem geringstmöglichen Zeitverzug ein Korrektursignal auf die Prägebewegung VPr gegeben, wodurch sich eine zusätzliche Druckerhöhung $D_{B1}{}^x$ einstellt. Wird davon ausgegangen, dass zum Messzeitpunkt $D_{B1} = D_{A1}$ (im Massepolster) ist, so stellt sich automatisch durch die korrigierte Prägebewegung (VPr) ein grösserer Druck $B_{B1}{}^x$ ein, welcher sofort eine Rückströmung von der Kavität in das Massepolster $M_P$ zur Folge hat. Als Alternative ist es möglich, eine sinngemässe Korrektur über die Bewegung bzw. Geschwindigkeit V der Einspritzschnecke, jeweils mit umgekehrter Bewegungsrichtung, vorzunehmen. Bei einem Zuviel an eingespritzter Masse in die Kavität wird der Druck $D_{A1}$ abgesenkt, so dass dies gleicherweise zur beschriebenen Strömungsumkehr führt und eine Gewichtskorrektur für die fertige CD zur Folge hat. In der Praxis wird durch das Aufbringen der Prägekraft Pr R in den Formkavitäten eine Drucksteigerung $DB_1{}^x$ erzeugt, welche ein entsprechendes Rückströmen der Masse durch den Anguss verursacht. Die neue Erfindung beeinflusst mit der Druckänderung $DB^1$, $DB_1{}^x$ die Rückströmgeschwindigkeit (DK) sehr gezielt.

Die Figur 2 zeigt etwas konkreter die Situation am Ende der Einspritzphase. Zumindest theoretisch ist es möglich, die dargestellte Druckkorrektur bereits am Ende der Einspritzphase bzw. Dosierphase Dos vorzunehmen. Als idealer Zeitpunkt für die Detektion des Druckes in den Formen wird der Zeitpunkt gesehen, unmittelbar nachdem durch die Prägebewegung die Schmelze die Kavitäten (Kav) vollständig ausgefüllt haben. Es ist der Zeitpunkt mit einer sehr starken Druckänderung durch die zunehmende Prägekraft auf die vollständige, eingesperrte Giessmasse (Ma).

Die Figur 3a zeigt einen weiteren vorteilhaften Ausgestaltungsgedanken für die Verbesserung der Regelgenauigkeit. Für dieses Ziel wird das mechanische Spiel aller entsprechend wirksamen mechanisch bewegbaren Teile durch eine Vorspannfeder 50 aufgehoben. Wichtig dabei ist, dass die Vorspannfeder in die selbe Richtung wirkt wie der Kraftaufbau für die Prägung. Die Figur 3b zeigt einen Schnitt durch eine Lagerstelle 51 einer Säulenachse 56. An den beiden äusseren Seiten ist je eine Dichtung 52 bzw. 53 angebracht. Dies gestattet, im Inneren der Lagerung eine Fettschmierung einzuschliessen, so dass auch hier die Forderung einer langen Lebensdauer sowie der Reinraumeinsatz sichergestellt sind.

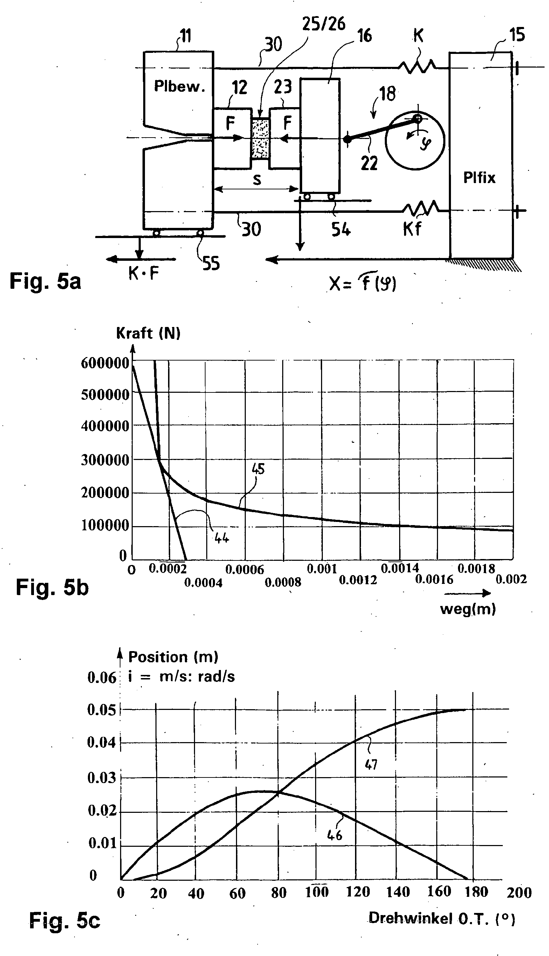

Das optimale Regelziel liegt innerhalb von etwa 180°, wie aus der Figur 3c erkennbar ist. In der Figur 3c sind drei unterschiedliche Lagen dargestellt: Beim Drehwinkel $\varphi$1 ist die Form offen; Drehwinkel $\varphi$2 stellt den Prägespalt und $\varphi$3 die Stellung bei der maximalen Prägekraft dar. Bei der maximalen Prägekraft kann die Kurbel in der Totpunktlage oder aber in Totpunktnähe sein. F bedeutet die wirksame Kraft auf die deformierbaren Teile der Maschine, insbesondere auf die Säulen 30. Die Werkzeugaufspannplatte 16 ist symbolisch auf Rollen 54 und die Werkzeugaufspannplatte auf Rollen 55 gelagert (Figur 5a). Damit soll deutlich gemacht werden, dass beide Werkzeugaufspannplatten 11 und 16 senkrecht in Bezug auf die Antriebsträgerplatte 15 verschiebbar und damit relativ zueinander bewegbar sind. Als Konsequenz aus den Relativbewegungen der beiden Formhälften 12 und 23 ergibt sich eine direkte Änderung des Distanzmasses S, je nach örtlicher Lage der beiden Werkzeugaufspannplatten 11 und 16. Sinngemäss ist die Werkzeugaufspannplatte 11 mit PI bezeichnet. Die Werkzeugaufspannplatte 11 bewegt sich mit der Funktion K · F und die Werkzeugaufspannplatte 16 mit der Funktion X = f ($\varphi$). Für das Distanzmass S ergibt sich die folgende Funktion:

$$S = X + K \cdot F = f (\varphi) + K \cdot F$$

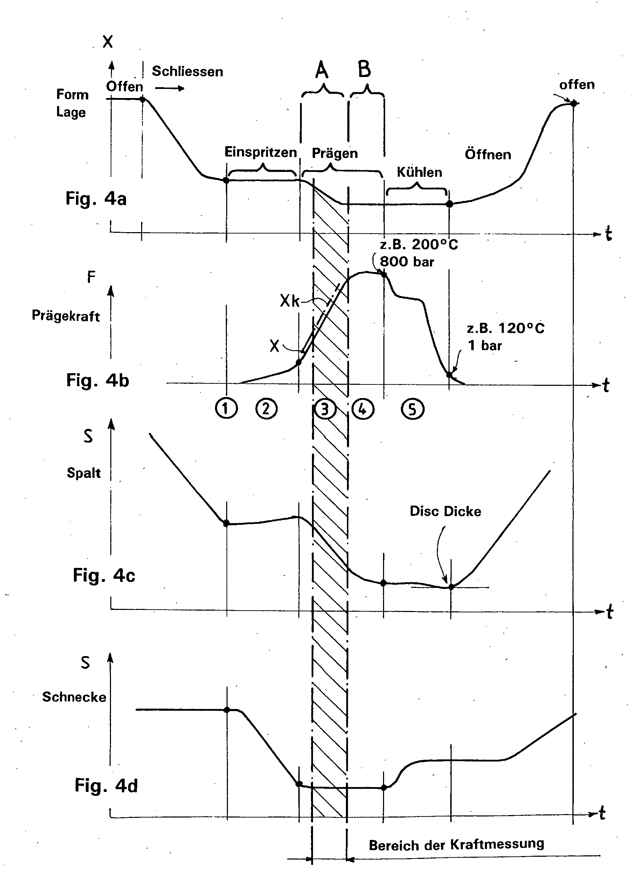

Die Figuren 4a und 4b zeigen qualitativ den Verlauf der wichtigsten Parameter die Lage der Form sowie die Prägekraft. Die Figuren 4c und 4d zeigen den Spalt sowie den Schneckenweg über dem selben Zeitmassstab. Für die Schliesskraftregelung beim Prägen gelten die folgenden Zusammenhänge: Bestimmung SK (Schliesskraft) am Prägeende: Fp. Mittelwertbildung zur Eliminierung von zufälligen Schwankungen: Fp50. Regelfehler: $\Delta$F = FSoll Prägen - Fp50 = Temp.einfluss. Regelziel: $\varphi$ = 180°

$$\frac{\Delta F}{K} = \Delta \, x \rightarrow \text{Korrektur an Inspekt Hub als Zentral-Verstellung}$$

In den Figuren 4a bis 4d ist zusätzlich der Grundgedanke für die Korrektur in einem ersten Abschnitt A der Prägephase markiert. Der Punkt X stellt symbolisch eine erste, realistisch mögliche Messung des Druckes bei Beginn der Prägephase dar, wobei XK sinngemäss eine Ist-Druckkurve darstellt. Am Ende des ersten Abschnittes A muss die Korrektur, eventuell eine wiederholte Korrektur, vollständig abgeschlossen sein, so dass bei Beginn des zweiten Abschnittes B nach Einfrieren des Angusses mit der exakt erforderlichen Masse die Prägephase durchgeführt werden kann. Am Ende der Prägephase hat die Schmelze zu der Kavität noch eine Temperatur von z.B. 200°C, dies bei etwa 800 bar. Am Ende der Kühlphase ist das Produkt bereits auf 120°C abgekühlt, dies bei einem bar. Der ganze Giesszyklus kann auf die folgenden sechs Punkte reduziert werden:

1) Position BFP = Produktdicke + Prägespalt (W2 verschlossen)
2) Einspritzen Masse Kühlen Kraftaufbau über Kraft der Schmelzeverteiler
   (Fliesswiderstand) Prägespalt positionsgeregelt (öffnet leicht über Säulendehnung)
3) Prägen:
   A Kuchen verteilen: Nachdruck aufbauen → DFP weicht unter
   Säulendehnung aus; → Anguss noch nicht eingefroren, Masseverlust durch Rückströmung im Schneckenvorderteil, mit Prägegeschwindigkeit wird Masseverlust gesteuert.
4) Prägen:

   B (nach Einfrieren des Angusses) Ausprägung des Fertigproduktes (Nachdrehersatz)

5) Kühlen: Schliesskraft wird abgesteuert, um eine Schwindung gemäss PVT-Diagramm zu ermöglichen, ohne dass interne Spannungen entstehen.
6) Form öffnen

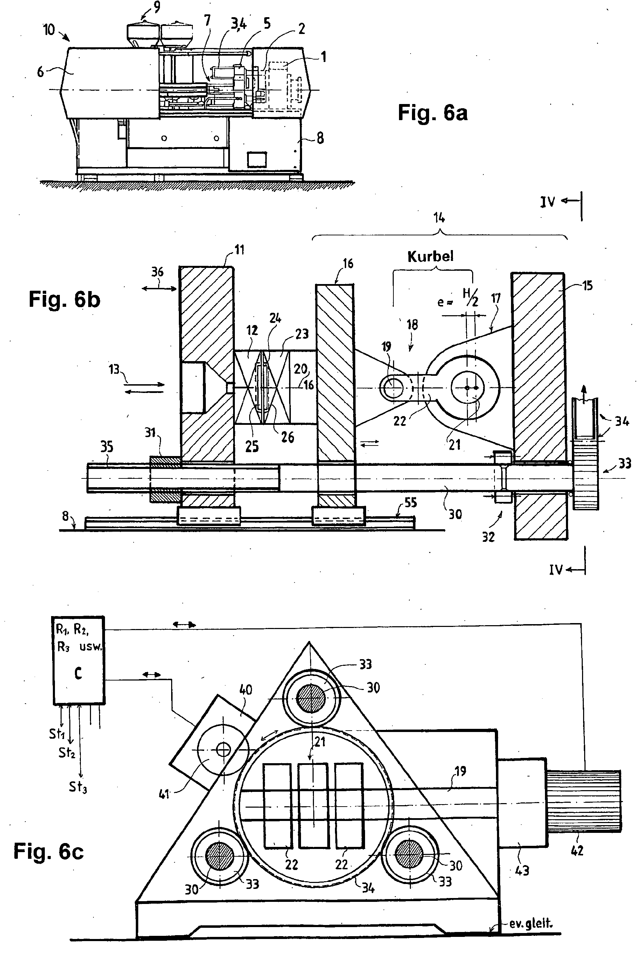

Die Figur 5a zeigt entsprechend Figur 6b ein Grundschema mit den maschinenbaulichen Kernelementen. Dabei bedeutet $K_f$ die Federkonstante der Säule 30, gegebenenfalls mit Einschluss der übrigen deformierbaren Bauteile, soweit die resultierende Deformation unter einer entsprechenden Belastung die Distanz S zwischen den Werk-

EP 1 568 461 A1

zeugaufspannplatten 11 und 16 beeinflusst. Die Antriebsträgerlatte 15 ist mit PLfix bezeichnet. In diesem Baukonzept ist die Antriebsträgerplatte starr bzw. fix auf dem Maschinenständer. Beim Kurbeltrieb 18 ist mit φ der Drehwinkel angegeben.

In der Figur 5b ist mit der ausgezogenen Linie 45 der theoretische Kraftverlauf am Ende der Schliessbewegung dargestellt. Die dicke Linie 44 zeigt den effektiven Kraftverlauf auf beide Formhälften auf Grund der hook'schen Kennlinien der Verformung der Säulen sowie der Platten, bei einer CD-Schliesseinheit mit 50mm Öffnungsweg. In Figur 5c zeigt die untere Linie 46 den Geschwindigkeitsverlauf und die Kurve 47 den Verlauf der Exzenterbewegung für einen CD-Formschluss.

Mit der bekannten Lösung gemäss Figur 6a wird im Stand der Technik eine CD in 3,7 Sekunden oder weniger hergestellt. Es handelt sich um eine Lösung der Anmelderin. Es ist eine vollhydraulische Maschine 10 mit sehr guten Eigenschaften in Bezug auf die Maschinenstabilität und weist drei Säulen sowie die Möglichkeit für einen Kurzsowie einen Langhub auf. Der Kurzhub liegt bei 70 bis 80 mm, und die Schliesskraft ist bei etwa 600 kN. Der Wartungshub liegt bei etwa total 300 mm. Eine Formplatte 1 ist fest mit einem Maschinenständer 8 verbunden. Die Zugstangen 2 sind verschraubt mit der Formplatte 1, wobei am anderen Ende der Zugstangen 2 ein Kolbenkopf 3 sich innerhalb eines Zylinders 4 befindet. Die Formplatte 5 ist in einer Produktionsstellung gezeichnet, wobei der Kolbenkopf 3 dauernd gegen eine Schulter der Zugstangen 2 drückt. Mit relativ geringen Kräften bewegt sich über zwei Hilfszylinder ein Schliesskolben vor- und rückwärts über den ganzen Kurzhub. Nur für das Aufbringen der grossen Schliesskraft wird der entsprechende Oeldruck in einer Kolbenkammer aufgebracht. Für das Wechseln eines Stampers in der Form werden die drei Zylinder an den Zugstangen angesteuert, und die Formplatte 5 öffnet sich um den Wartungshub. Die Maschine 10 ist mit geöffneter Schutztüre 6, mit Sicht auf den Formschluss und den Einspritzzylinder 7, dargestellt. Das Rohmaterial wird über Füllbehälter 9 der Maschine zugeführt, über den Einspritzzylinder erwärmt und unter Druck in die Kavitäten der Formen gespritzt.

Die Figur 6b zeigt bildlich das Grundkonzept für die Herstellung von flachen Datenträgern, wie etwa Kompaktdisks, beim Übergang von der Einspritzphase in die Prägephase. Im Zentrum ist eine Kavität Kav, welche letztlich die äussere Form des Datenträgers bestimmt. Im Laufe der Entwicklung des Produktionsprozesses wurden verschiedene Konzepte verfolgt. Unveränderte Gültigkeit hat die Tatsache, dass für die höchsten Anforderungen eine Menge der Spritzmasse dosiert in die Kavität gepresst wird, jedoch nur soviel, dass die Kavität nur teilweise gefüllt wird. Vorgängig der Füllung wird durch Bewegen der Formplatte 1 oder der Formplatte 5 ein vorbestimmter Kompressionsspalt gebildet. Die Menge der Spritzmasse ist mit Ma bezeichnet. Nach Abschluss der Formfüllphase bzw. des Einspritzvorganges wird der eigentliche Prägevorgang eingeleitet. Beim Beispiel gemäss Figur 8c wird dafür die Formplatte 1 in Richtung der Kavität bewegt und unter Aufbringen einer maximalen Kraft der Formhohlraum bzw. die Kavität verkleinert und die Masse verdichtet. In älteren Verfahren wurde dafür der Kompressionsspalt bis auf 0 aufgehoben. In der neuen Lösung ist erkannt worden, dass die Werkzeuge nicht auf Anschlag gefahren werden dürfen, dass vielmehr ein Restspalt für eine exakte Endregelung, auch nach Abschluss der Prägung, verbleiben soll. Die Figur 8c zeigt ein an sich bekanntes Baukonzpet für die Formbewegung. Die Voreinstellung des Kompressionsspaltes wird elektromotorisch durch Bewegen der Formplatte 1 erzielt. Nach Abschluss der Dosierung wird über Oeldruck die für das Prägen erforderliche Kraft erzeugt. Dabei handelt es sich um eine Hybridlösung mit allen Vorteilen und Nachteilen der zwei Antriebsmittel.

Die Figur 6b zeigt ein Beispiel der neuen Lösung. Auf der linken Bildseite der Figur 6b ist die düsenseitige Werkzeugaufspannplatte bzw. Langhubträgerplatte 11 mit einer Formhälfte 12 dargestellt, auf die hin, gemäss Pfeilen 13, die Einspritzdüse 7 zu- und wegbewegt wird. Die Langhubträgerplatte 11 kann, je nach gewähltem Konzept, fest oder beweglich an dem Maschinenständer 8 angeordnet werden. Auf der rechten Bildseite befindet sich als eine bevorzugte Lösung eine kompakte Baueinheit 14 mit einem Kurbelantrieb. Die Baueinheit 14 besteht aus einer Antriebsträgerplatte 15 und einer beweglichen Werkzeugaufspannplatte 16, die auf einer Führung 20 auf dem Maschinenbett 8 aufliegt, sowie einer Kurbelträgerkonstruktion 17. Ein Kurbeltrieb 18 ist einerseits über einen Bolzen 19 in der beweglichen Werkzeugaufspannplatte 16 und andererseits über einen Exzenter 21 in der Kurbeltragkonstruktion 17 gelenkig gelagert, derart, dass die Kurbel 22, entsprechend der Exzentrizität e, die Kurbelbewegung ausführen kann. Die Exzentrizität e entspricht der halben Hubhöhe (H/2). Auf der gegenüberliegenden Seite der beweglichen Werkzeugaufspannplatte 16 befindet sich die eine Formhälfte 23. Mit den beiden Formhälften 12 sowie 23 entsteht in geschlossenem Zustand der Hohlraum 24 für die Einlage des gewünschten scheibenförmigen Formteiles. Üblicherweise wird die CD nicht direkt in den Hohlraum 24 gegossen. In den Hohlraum wird ein- oder beidseitig je ein Stamper 25, 26 eingelegt, welcher als Negativform die Kavität für den herzustellenden flachen Datenträger aufweist. Die Verankerungs- und Haltekraft zwischen den beiden Platten wird durch drei oder gegebenenfalls vier Säulen 30 sichergestellt. Jede Säule 30 ist auf der düsenseitigen Werkzeugaufspannplatte 11 über eine Mutter 31 verankert. An der Antriebsträgerplatte 15 ist ein drehbeweglicher Bund 32 befestigt, welcher über einen Zahnkranz 33 in einen Zahnreifen 34 eingreift. Die feste Mutter 31 greift über ein Innengewinde auf den Gewindelauf 35 jeder Säule ein. Eine Drehbewegung des Zahnkranzes oder des Zahnriemens wird durch die Drehung der Säulen auf die Mutter 31 und den Gewindelauf 35 der Säulen in eine Linearbewegung (Pfeile 36) der düsenseitigen Werkzeugaufspannplatte 11 umgesetzt. Diese Bewegung stellt den Lang- oder Wartungshub dar und wird primär beim Stamperschnellwechsel benötigt. Der kurze Arbeitshub wird dagegen über den Kurbeltrieb 18 sowie die bewegliche Werkzeugaufspannplatte 16 durchgeführt. Die Figur 8c zeigt schematisch den An- bzw. Übertrieb für die Säulenmuttern bzw. den Langhub mit einem Elektromotor 40 mit Antriebsritzel 41 sowie den Antrieb für den Kurzhub über einen Elektromotor 42, ein Getriebe 43 und den Exzenter 21. Die Einspritzeinheit mit Plastifizierzylinder sind der düsenseitigen Werkzeugaufspannplatte 11 und beide elektromotorischen Antriebe der anderen, festen Trägerplatte zugeordnet. Der Wartungshub wird mit einer an sich bekannten "Formbauhöhenverstellung" mittels Radkranz und Zahnrädern an den Säulenmuttern gefahren. Als Alternative kann die Drehung der Säulen mit einem Zahnriemen realisiert werden. Mit der Lagerung der Säulen mit Wälzlagern in den Formplatten und mit der Schmierung der Lager und der Verstellgewinde lassen sich höhere Verstellgeschwindigkeiten und damit Umrüstungszeiten beim Wechsel der Matrize (Stamper) von kleiner als 30 Sekunden erreichen. Neu wird deshalb auch für diesen Antrieb ein Motor mit genau positionierbarer Achse, vorzugsweise ein Servomotor mit spielarmem Getriebe, eingesetzt. Zwischen Kurbeltrieb und elektrischem Antriebsmotor befindet sich ein Getriebe, vorzugsweise ein Stirnradgetriebe. Mit C ist eine Steuer-/Regelintelligenz mit Speicher angedeutet, welche der entsprechenden Motorsteuerung/Regelung die jeweils erforderlichen Programmabläufe bzw. Rezepte vorgibt. Im Kasten C ist mit R1, R2, R3, usw. angedeutet, dass beliebige Rechenleistungen direkt vor Ort installiert und entsprechende Koordinationen direkt durchgeführt werden können. Sinngemäss können die Steuerverbindungen St1, St2, St3 vorgesehen und eine entsprechende Optimierung aller Steuer- und Regelabläufe sichergestellt werden.

**Patentansprüche**

1. Spritzgiessmaschine für die Herstellung von Präzisionsteilen, insbesondere von flachen optischen Datenträgern mit einer Spritzgiessmaschine mit zwei Formhälften, einer angetriebenen Formhälfte sowie einer Gegenformhälfte sowie einem Prägeantrieb, wobei der Kraftschluss zwischen der angetriebenen Formhälfte und der Gegenformhälfte bei der Grundeinstellung und dem ganzen Spritzzyklus über antreibbare Säulen der Spritzgiessmaschine herstellbar wird, welche sich in Funktion des Prägekraftverlaufes dehnen und das Spaltmass zwischen der angetriebenen Formhälfte und der Gegenformhälfte entsprechend beeinflussen,
   **dadurch gekennzeichnet,**
   **dass** der Säulenantrieb den Säulen zugeordnete Vorspannfedern aufweist.

2. Spritzgiessmaschine nach Anspruch 1,
   **dadurch gekennzeichnet,**
   **dass** zur Verbesserung der Regelgenauigkeit das Spiel aller entsprechend wirksamen mechanisch bewegbaren Teile aufhebbar ist.

3. Spritzgiessmaschine nach Anspruch 1 oder 2,
   **dadurch gekennzeichnet,**
   **dass** die Vorspannfedern in dem Bereich einer Lagerstelle mit Verstellgewinde angeordnet sind.

4. Spritzgiessmaschien nach Anspruch 3,
   **dadurch gekennzeichnet,**
   **dass** die Lagerstelle beidseits abgedichtet ist und eine Fettschmierung der Lager und der Verstellgewinde aufweist.

5. Spritzgiessmaschine nach einem der Ansprüche 1 bis 4,
   **dadurch gekennzeichnet,**
   **dass** der Antrieb zur Verstellung der Formeinbauhöhe einen Motor mit genau positionierbarer Achse vorzugsweise einen Servomotor mit spielramem Getriebe aufweist.

Fig. 1

Fig. 2

Fig. 3b

Fig. 3c

Fig. 3a

X
Form Lage
Offen
Schliessen →
A B
Einspritzen  Prägen
Kühlen
Öffnen
offen
**Fig. 4a**
t

F
Prägekraft
z.B. 200°C 800 bar
Xk
X
z.B. 120°C 1 bar
**Fig. 4b**
t

① ② ③ ④ ⑤

S
Spalt
Disc Dicke
**Fig. 4c**
t

S
Schnecke
**Fig. 4d**
t

Bereich der Kraftmessung

**Fig. 5a**

**Fig. 5b**

**Fig. 5c**

**Fig. 6a**

**Fig. 6b**

Kurbel

IV

**Fig. 6c**

R₁, R₂, R₃ usw.

C

St₁
St₂
St₃

ev. gleit.

**Europäisches
Patentamt**

## EUROPÄISCHER RECHERCHENBERICHT

Nummer der Anmeldung

EP 05 00 6085

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN<br>Bd. 018, Nr. 083 (M-1558),<br>10. Februar 1994 (1994-02-10)<br>& JP 05 293862 A (MITSUBISHI ELECTRIC<br>CORP), 9. November 1993 (1993-11-09)<br>* Zusammenfassung *<br>----- | 1-5 | B29C45/17<br>B29C45/57 |
| A | US 5 338 171 A (HAYAKAWA ET AL)<br>16. August 1994 (1994-08-16)<br>* Spalte 9, Zeile 50 - Spalte 10, Zeile<br>12; Abbildung 3 *<br>----- | 1-5 | |
| A | US 2 790 204 A (EDWARDS EVAN A ET AL)<br>30. April 1957 (1957-04-30)<br>* Spalte 2, Zeile 37 - Zeile 42; Abbildung<br>1 *<br>----- | 15 | |

RECHERCHIERTE
SACHGEBIETE (Int.Cl.7)

G11B
B29C

Der vorliegende Recherchenbericht wurde für alle Patentansprüche erstellt

| Recherchenort | Abschlußdatum der Recherche | Prüfer |
|---|---|---|
| München | 5. Juli 2005 | Topalidis, A |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 6085

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2005

| Im Recherchenbericht angeführtes Patentdokument | | Datum der Veröffentlichung | Mitglied(er) der Patentfamilie | | Datum der Veröffentlichung |
|---|---|---|---|---|---|
| JP 05293862 | A | 09-11-1993 | JP | 2836362 B2 | 14-12-1998 |
| US 5338171 | A | 16-08-1994 | JP | 4348916 A | 03-12-1992 |
| US 2790204 | A | 30-04-1957 | KEINE | | |

Für nähere Einzelheiten zu diesem Anhang : siehe Amtsblatt des Europäischen Patentamts, Nr.12/82

EPO FORM P0461